(19) Europäisches Patentamt
European Patent Office
Office européen des brevets

(11) Numéro de publication: **0 362 012 B1**

(12) # FASCICULE DE BREVET EUROPEEN

(45) Date de publication de fascicule du brevet: **29.12.93**

(51) Int. Cl.5: **C08K 13/02**, C08L 57/08, //(C08K13/02,3:26,5:07,5:3432)

(21) Numéro de dépôt: **89402516.2**

(22) Date de dépôt: **14.09.89**

(54) **Compositions stabilisantes pour polymères halogénés, à base de béta-dicétone, d'hydrotalcite et de dihydropyridine, et polymères ainsi stabilisés.**

(30) Priorité: **23.09.88 FR 8812478**

(43) Date de publication de la demande:
**04.04.90 Bulletin 90/14**

(45) Mention de la délivrance du brevet:
**29.12.93 Bulletin 93/52**

(84) Etats contractants désignés:
**BE DE ES FR GB GR IT LU NL SE**

(56) Documents cités:
**EP-A- 0 005 678**
**EP-A- 0 189 899**
**EP-A- 0 256 872**

(73) Titulaire: **ELF ATOCHEM S.A.**
**4 & 8, Cours Michelet**
**La Défense 10**
**F-92800 Puteaux(FR)**

(72) Inventeur: **Layrisse, Jean-Luc**
**10 Avenue Ballard**
**F-04600 Saint-Auban(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3.10/3.6/3.3.1)

## Description

L'invention a pour objet de nouvelles compositions stabilisantes pour polymères halogénés, lesdites compositions comprenant une béta-dicétone, une hydrotalcite, une dihydropyridine. Elle concerne également les polymères halogénés stabilisés au moyen desdites compositions.

On a déjà proposé (demande japonaise 80445/80) d'utiliser des hydrotalcites comme stabilisants du chlorure de polyvinyle (PVC). La stabilisation au moyen d'hydrotalcite seule ou combinée aux sels métalliques usuels, par exemple le stéarate de calcium conduit à une stabilité thermique très moyenne (voir brevet européen 0063180).

On a également proposé (demande de brevet européen 0189899) de stabiliser des résines synthétiques contenant des halogènes et/ou des substances acides au moyen de solutions solides d'hydrotalcites contenant au moins un cation métallique divalent choisi dans le groupe constitué par Mg, Ca, Sr et Ba, au moins un second cation métallique divalent choisi dans le groupe constitué par Zn, Cd, Pb et Sn et un cation métallique trivalent (Al, Bi, In, Sb, B, Ga ou Ti et notamment Al).

Par ailleurs, on a proposé (US 2.669.548, US 3.001.970, GB 1.141.971, US 3.493.536, US 4.102.839, US 4.123.399, US 4.123.400) d'utiliser, seules ou en association avec des sels métalliques, par exemple des sels de zinc, des béta-dicétones pour la stabilisation du PVC.

On a également proposé (brevet européen 0063180) d'associer une béta-dicétone à une hydrotalcite exempte du second cation métallique divalent mentionné dans la demande de brevet européen 0189899 citée plus haut (Zn, Cd, Pb et Sn ) pour la stabilisation de polymères contenant des halogènes.

On a encore proposé (demande japonaise 61-113635) de stabiliser des polymères halogénés au moyen d'une composition comprenant une hydrotalcite et une dihydropyridine.

On a encore proposé (US 4.267.083) d'associer une béta-dicétone à une dihydropyridine dans le but de stabiliser du PVC.

D'une manière générale, les différentes compositions stabilisantes précitées conduisent à une amélioration de la stabilité thermique du polymère halogéné. L'expérience montre cependant que la tenue dans le temps de la stabilité de la couleur se fait en général au détriment de la résistance du polymère lui-même à la température habituelle de mise en oeuvre ou transformation c'est-à-dire entre 180 et 225 °C.

L'invention a pour objet de nouvelles compositions stabilisantes pour polymères halogénés, lesdites compositions comprenant au moins un stabilisant constitué par un sel métallique d'acide carboxylique et étant caractérisées en ce qu'elles comprennent :

a) au moins une béta-dicétone

b) au moins une hydrotalcite comprenant au moins un cation métallique divalent choisi dans le groupe constitué par Mg, Ca, Sr et Ba, au moins un cation métallique choisi dans le groupe constitué par Zn, Cd, Pb et Sn et au moins un cation métallique trivalent

c) au moins une dihydropyridine

La béta-dicétone peut être choisie dans le groupe constitué par les produits de formule :

$$R_2 - CO - C(R_1)_2 - CO - Z \,[\, CO - C(R_1)_2 - CO - R_2 \,]_n \qquad (I)$$

dans laquelle :

- $R_1$ peut représenter H, un radical hydrocarboné renfermant jusqu'à 18 atomes de carbone, éventuellement substitué par un ou plusieurs halogènes ou groupes hydroxy, alcoxy, ester, alkyle, alcoxycarbonylalkyle ayant de 1 à 8 atomes de carbone ou - $COR_2$) ;
- $R_2$ peut représenter H, OH, un radical hydrocarboné ayant jusqu'à 18 atomes de carbone, non substitué ou portant un au moins des substituants mentionnés ci-avant pour $R_1$ à l'exception de - $COR_2$, sachant que si Z = $R_2$ ou si n est compris entre 1 et 3, un seul des symboles $R_2$ représente H ;
- un radical $R_1$ et un radical $R_2$ ou deux radicaux $R_2$ peuvent former ensemble un radical cyclique alkylène divalent ;
- n est compris entre 0 et 3 ;
- Z est choisi dans le groupe constitué par $R_2$ et un radical polyvalent choisi dans le groupe constitué par une liaison directe entre les CO, un radical $R_3$, un radical

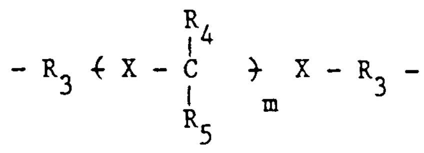

ou

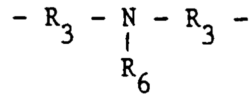

où $R_3$ est un radical hydrocarboné polyvalent ayant jusqu'à 18 atomes de carbone ;

$R_4$ et $R_5$ représentent H ou un radical hydrocarboné ayant jusqu'à 18 atomes de carbone ou forment ensemble un radical cyclique alkylène divalent ;

X représente - O - ou - S -

m est égal à 0 ou 1

$R_6$ peut représenter H, un radical hydrocarboné ayant jusqu'à 18 atomes de carbone ou $R_3$.

On peut utiliser les béta-dicétones telles quelles ou sous leur forme énolique et notamment sous forme de leurs énolates métalliques ou énolates d'organoétain.

L'hydrotalcite peut être représentée par la formule :

$$\left[(M_1^{2+})_{y1} \quad (M_2^{2+})_{y2}\right]_{1-x} \quad M_x^{3+}(OH)_2 \, A_{x/z}^{z-} \cdot w \, H_2O \qquad (II)$$

dans laquelle :

- $M_1^{2+}$ représente au moins un cation métallique divalent choisi dans le groupe constitué par Mg, Ca, Sr et Ba ;
- $M_2^{2+}$ représente au moins un cation métallique divalent choisi dans le groupe constitué par Cd, Pb, Zn et Sn ;
- $M^{3+}$ représente un cation métallique trivalent ;
- $A^{z-}$ représente un anion de valence z ;
- x, y1, y2 et w répondent aux relations : $0 < x \leqq 0{,}5$

$0 < y_1$

$0 < y_2$

$0{,}5 \leqq y_1 + y_2 \leqq 1$

$0 < w < 2$.

La dihydropyridine peut être représentée par la formule :

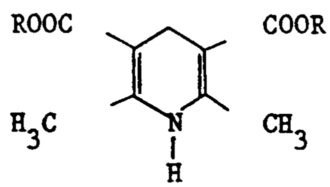

(III)

dans laquelle le symbole R représente un radical monovalent choisi par les radicaux alkyle, alcényle, cycloalkyle, aryle, alkylaryle et arylalkyle ayant jusqu'à 20 atomes de carbone.

La préparation de chacun des constituants précités (béta-dicétone, hydrotalcite, dihydropyridine et sel métallique) est largement décrite dans la littérature et ne constitue pas, en elle-même, un objet de l'invention.

Dans la formule I (béta-dicétone), les symboles $R_1$, $R_2$ et $R_3$ représentent plus particulièrement des radicaux alkyle avant de 1 à 18 atomes de carbone, cycloalkyle, cycloalkylalkylène ou alkylcycloalkyle ayant de 5 à 18 atomes de carbone ou aryle, alkylaryle ou aralkyle ayant de 6 à 18 atomes de carbone.

A titre d'illustration des béta-dicétones utilisables dans les compositions conformes à l'invention, on peut citer notamment la cyclohexanedione-1,3, la méthylène bis cyclohexanedione-1,3, la benzyl-2 cyclohexanedione-1,3, l'acétyltétralone, la palmitoyltétralone, la stéaroyltétralone, la benzoyltétralone, l'acétyl-2 cyclohexanone, la benzoyl-2 cyclohexanone, l'acétyl-2 cyclohexanedione-1,3, le benzoyl p.chlorobenzoylméthane, le bis(méthyl-4 benzoyl)méthane, le bis(hydroxy-2 benzoyl) méthane, la benzoylacétone, le tribenzoylméthane, le diacétylbenzoylméthane, le stéaroylbenzoylméthane, le palmitoylbenzoylméthane, le lauroylbenzoylméthane, le dibenzoylméthane, le bis(chloro-4 benzoyl) méthane, le bis-

(méthylène dioxy-3,4 benzoyl) méthane, le benzoylacétylphénylméthane, le stéaroyl(méthoxy-4 benzoyl) méthane, la butanoylacétone, le distéaroylméthane, l'acétylacétone, la stéaroylacétone, le bis (cyclohexanoyl) méthane, le dipivaloylméthane.

Parmi ces béta-dicétones, on donnera la préférence au stéaroylbenzoylméthane, à la benzoylacétone, à la stéaroylacétone.

Parmi les hydrotalcites de formule (II), on donne la préférence dans l'invention aux produits représentés par ladite formule (II), avec les significations suivantes pour les différents symboles :

- $M_1^{2+}$ représente Mg ou Ca ou une combinaison de Mg avec Ca, Sr ou Ba et plus encore Mg ou Mg/Ca ;
- $M_2^{2+}$ représente Zn, Cd, Zn/Cd et plus encore Zn ;
- $M^{3+}$ représente Al ;
- $A^{z-}$ représente un anion de valence z tel que $CO_3^{2-}$ , $OH^-$, $HCO_3^-$ , $ClO_4^-$ , un ion acétate (-), salicylate (-), citrate (3-), tartrate (2-), $NO_3^-$, $I^-$, $HPO_4^{2-}$ ,

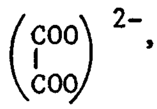

$[Fe(CN)_6]^{4-}$, $SiO_3^{2-}$
et de préférence $A^{z-}$ représente $CO_3^{2-}$ ou $OH^-$ ;
- x, $y_1$, $y_2$ et w répondent aux relations suivantes : $0{,}2 < x < 0{,}5$ et de préférence $0{,}25 < x < 0{,}35$, $y_1 > y_2$ et $0 < w < 2$.

On utilise tout particulièrement une ou plusieurs hydrotalcites de formule :

$$[\,(Mg^{2+} \text{ ou } Mg^{2+} / Ca^{2+})_{y1}\ (Zn^{2+} \text{ et/ou } Cd^{2+})_{y2}\,]_{1-x}\ Al_x^{3+}\ (OH)_2\ CO_3^{2-}{}_{x/2} \bullet w\ H_2O$$

x, y1, y2 et w ayant les significations données ci-avant.

Parmi les dihydropyridines de formule (III), on utilise tout particulièrement les produits dans la formule desquels les symboles R représentent un radical alkyle ayant de 1 à 12 atomes de carbone et notamment méthyle, éthyle, lauryle, un radical alcényle renfermant jusqu'à 6 atomes de carbone, un radical cyclohexyle, un radical phényle.

Parmi ces produits, on citera tout particulièrement les diméthyl-2,6 dihydro-1,4 pyridine dicarboxylates-3,5 de diéthyle et de dilauryle.

Le sel métallique d'acide carboxylique peut dériver de l'un des acides éthyl-2 hexanoïque, laurique, myristique, palmitique, stéarique, hydroxystéarique, linoléïque, béhénique, isostéarique, oléïque, ricinoléïque, caproïque, heptanoïque, n- ou iso- octylique, pelargonique, néotridécanoïque, acrylique, linolénique, crotonique, acétoacétique, acétique, maléïque, thiodipropionique, dithiopropionique. On peut également utiliser les esters partiels des acides dibasiques précités avec des alcools aliphatiques, cycloaliphatiques ou aromatiques. On peut également utiliser des acides cycliques tels que les acides benzoïque, méthylbenzoïque, butylbenzoïque, benzoylbenzoïque, p.t.butylbenzoïque, phénylacétique, salicylique, naphtoïque, abiétique, phénylstéarique, naphténique, cinnamique ou pyrrolidone carboxylique. Les sels métalliques desdits acides peuvent dériver des métaux suivants : Li, Na, K, Mg, Ca, Sr, Ba, Pb, Zn, Cd, Zr, Al, Si, Sn, Sb et Bi. On utilise de préférence un ou plusieurs sels choisis parmi les acétates, acétoacétates, stéarates, oléates, laurates, palmitates, benzoates, hydroxystéarates, éthyl-2 hexanoates de calcium, baryum, zinc et cadmium éventuellement sous forme de couples tels que Ca/Zn, Ba/Ca, Ca/Cd ou Ba/Zn.

Dans les compositions stabilisantes conformes à l'invention, on utilise avantageusement les additifs précités dans les proportions suivantes (en poids) :

- 40 à 70 % du sel métallique d'acide carboxylique,
- 5 à 20 % de béta-dicétone
- 5 à 20 % d'hydrotalcite
- 5 à 20 % de dihydropyridine

(compte non-tenu des additifs éventuels à ces constituants, et dont il sera question plus loin).

L'invention concerne également les polymères halogénés stabilisés au moyen de la composition décrite ci-avant.

Bien que ces compositions soient utilisables pour la stabilisation de polymères contenant des halogènes apportés par le système catalytique et/ou des agents de traitement des polymères, tels que des polyoléfines obtenues avec des catalyseurs Ziegler ou des polymères post-halogénés et en particulier post-chlorés, par exemple des polyoléfines ou des caoutchoucs post-chlorés, les compositions conviennent tout particulièrement à la stabilisation de polymères issus au moins partiellement de monomères halogénés. Il peut s'agir par exemple de polymères fluorés tels que les polyfluorooléfines, en particulier les polyfluoroéthylènes ou de fluorure de polyvinyle ou de polyvinylidène. L'invention s'applique tout particulièrement aux homopolymères et copolymères obtenus à partir de chlorure de vinyle. Parmi les copolymères, on citera en particulier les copolymères de chlorure de vinyle et d'au moins un monomère choisi dans le groupe constitué par le chlorure de vinylidène, l'éthylène, les esters d'acide acrylique ou méthacrylique, le styrène, les esters vinyliques, l'acide et l'anhydride maléïque, les esters d'acide maléïque, cette liste n'étant donnée qu'à titre indicatif. L'invention concerne tout particulièrement les copolymères contenant au moins 50 % et de préférence au moins 80 % en poids de chlorure de vinyle copolymérisable.

Les homopolymères du chlorure de vinyle peuvent être préparés selon les techniques maintenant connues, à savoir en masse, en suspension ou microsuspension ou en dispersion.

Les homo- et copolymères précités peuvent être rigides ou souples et, selon le cas, peuvent renfermer les additifs usuels tels qu'agents renforçateurs de chocs, pigments et/ou charges, plastifiants, antioxydants ou stabilisants lumière ou ultraviolets.

Les compositions peuvent également renfermer des stabilisants complémentaires tels que des alkyl- ou arylphosphites et/ou des composés époxydés tels que l'huile de soja époxydée, et/ou des polyols, notamment les composés comprenant au moins 2 et de préférence au moins 4 groupements hydroxyle, tels que le D-xylitol, le D-sorbitol, le D-mannitol, le diglycérol, l'hydroxy-4, tétrahydroxyméthyl 3,3,5,5 tétrahydrofurane, le trihydroxyéthylisocyanurate, l'alcool polyvinylique, le triméthylolpropane, le tétraméthylolcyclohexanol, l'acide quinique, l'adonitol, l'alphaméthylglucoside, le glycérol.

Les compositions peuvent encore renfermer des sels de zinc, des polymères acryliques, des terpolymères à base de butadiène, par exemple les résines MBS, des lubrifiants internes ou externes tels que les cires esters, les esters d'acide gras, les cires de polyéthylène oxydées ou non, l'huile de ricin hydrogénée, la mono-oléate de glycérol, les esters d'acide montanique, la magnésie ou tout autre produit complexant de l'eau libérée par l'hydrotalcite en donnant un produit stable thermiquement et n'ayant pas d'influence négative sur la stabilisation du polymère.

Les compositions de polymères halogénées stabilisées au moyen des compositions stabilisantes conformes à l'invention peuvent renfermer jusqu'à 5 % de composition stabilisante, par rapport au poids du polymère halogéné. D'une manière préférentielle, elles renferment 0,5 à 3 % de composition stabilisante.

Rapportée à ses constituants principaux, une composition stabilisée conforme à l'invention renferme plus particulièrement, pour 100 parties de polymère halogéné (valeurs préférées entre parenthèses) :

- 0,01 à 5 parties de sel métallique (0,1 à 2)
- 0,005 à 2 parties de béta-dicétone (0,01 à 1)
- 0,005 à 2 parties d'hydrotalcite (0,05 à 1)
- 0,005 à 2 parties de dihydropyridine (0,01 à 1)

A l'exception des plastifiants qui peuvent en général être utilisés à des taux pouvant atteindre 100 % du poids du polymère halogéné, les différents additifs précités peuvent être utilisés à des taux pouvant aller de 0,05 à 20 % du poids dudit polymère.

La composition stabilisante conforme à l'invention peut être préparée séparément ou, le plus souvent, être formée en présence de tout ou partie du polymère halogéné et/ou, le cas échéant, de tout ou partie des additifs éventuellement utilisés. On peut utiliser les techniques habituelles de mélange des différents ingrédients. On peut notamment utiliser un turbo-mélangeur permettant d'obtenir une poudre sèche à la fin de l'opération de mélange des ingrédients avec le polymère. D'une manière générale, cette opération de mélange, et en particulier lorsqu'on utilise le turbo-mélangeur mentionné ci-avant, peut se faire à une température pouvant atteindre 80 à 120 °C.

La composition stabilisée peut être mise en forme en utilisant les techniques habituelles telles que moulage par injection, moulage par extrusion, calandrage.

Les compositions stabilisantes conformes à l'invention se caractérisent, au niveau des polymères halogénés stabilisés au moyens desdites compositions par une remarquable association de la tenue de la coloration (ou non coloration) dans le temps avec la résistance à la destruction thermique du polymère dans les conditions usuelles de température pour la mise en forme dudit polymère. Or il convient de noter que cette combinaison (évolution de la coloration, résistance à la température) ne s'observe, ni avec les constituants a, b et c, essayés séparément ni avec les couples formés à partir de ces constituants.

L'exemple suivant, qui n'est donné qu'à titre indicatif, illustre l'invention.

EXEMPLE

1.- Constituants (en grammes)

| | |
|---|---|
| - PVC (indice de viscosité 80 - norme NFT 51,013 préparé par polymérisation en suspension dans l'eau) | 100 |
| - Terpolymère méthacrylate de méthyle/butadiène/styrène (renforçant choc) | 7.5 |
| - Huile de soja époxydée | 5.5 |
| - Octanoate de zinc | 0.09 |
| - Polymère acrylique ("processing aid") | 0.5 |
| - Huile de ricin hydrogénée | 1.8 |
| - Cire polyéthylène (lubrifiant) | 0.6 |
| - Stéarate de calcium (sel de Ca) ) | voir tableau |
| - Stéaroylbenzoylméthane (SBM) ) | |
| - Dihydropyridine * (DHP) ) | |
| - Hydrotalcite ** ) | |

* Diméthyl-2,6 dihydro-1,4 pyridine dicarboxylate-3,5 de dilauryle

** de formule approximative :

$$\left[(Mg^{2+})_{y1}\quad(Zn^{2+})_{y2}\right]_{1-x}\quad Al^{3+}_{x}\quad(OH)_2\quad CO^{2-}_{3\ x/2}\ \cdot w\ H_2O$$

avec x = environ 0.33, cette hydrotalcite de surface spécifique (BET) moyenne de 9 $m^2/g$ étant commercialisée par KYOWA Chemical Industry Co. sous l'appellation ALCAMIZER-4.2.

2.- Préparation des échantillons

On introduit ensuite dans un turbo-mélangeur le polymère et les additifs liquides, en faisant une prédispersion pendant 30 secondes à petite vitesse (600 tr/mn environ). Les additifs solides sont alors introduits pour compléter le mélange des additifs et du polymère (à l'exception de la composition stabilisante dont la teneur sera déterminée indépendamment pour chaque mélange). Le mélange est d'abord chauffé jusqu'à atteindre 100 °C maximum, par l'intermédiaire d'une double enveloppe et d'une agitation rapide (1800 tr/mn environ). Par la suite, le mélange maître est refroidi pour atteindre 40 °C lors de la vidange.

Des fractions aliquotes sont prélevées sur le mélange maître réalisé en vue de l'addition séparée des compositions stabilisantes à tester. Les mélanges définitifs, réalisés dans des conditions identiques aux précédentes (seule la température maximum atteinte est de 95 °C) sont ensuite repérés et isolés à l'abri de l'humidité.

La mise en oeuvre de ces dry blends dépend du test d'évaluation à réaliser.

3.- Evaluations

3.1.- Mesure du temps de noircissement total du mélange réalisé à la presse Emidecau à 7 plateaux (400 mm x 400 mm) chauffée par circulation de vapeur, à 185 °C

La mise en oeuvre de ce test nécessite de travailler sur des éprouvettes ayant été prégélifiées sur malaxeur ouvert et découpées à partir de la feuille réalisée au malaxeur.

Description de la réalisation des éprouvettes

Sur malaxeur 2 cylindres LESCUYER (700 mm x 300 mm), tournant à la vitesse de 8 m/mn, sans friction, et réglé à la température de 180 °C ± 1 °C, on introduit le mélange poudre sèche, puis on le gélifie pendant 5 mn mesurées à partir de l'introduction de la poudre entre les cylindres. La feuille réalisée, d'épaisseur exactement 1 mm est découpée à l'emporte-pièce de forme circulaire, après refroidissement de l'échantillon entre deux plaques d'aluminium non pressées.

Description du test de mesure de stabilité thermique statique

A partir des pastilles d'échantillon ainsi réalisées, on introduit en même temps la série des échantillons dans la presse 7 plateaux et on prélève toutes les 5 ou 10 mn les échantillons, jusqu'au noircissement complet de la pastille, dont le temps correspondant est noté dans le tableau de résultats.

3.2.- Mesure de l'évolution dynamique de l'indice de jaunissement (YI : ASTM D 1925-70) sur des échantillons de films réalisés à 195 °C, sur malaxeur Lescuyer 500 mm x 200 mm, à cylindres en acier poli

Réalisation du test

Les poudres sèches des mélanges correspondant sont introduites sur le malaxeur Lescuyer, tournant à la vitesse de 8 m/mn, sans friction et réglé à la température de 195 °C ± 2 °C. L'écartement entre cylindres est réglé pour obtenir, à partir des 200 g initialement introduits, un film homogène d'épaisseur 1 mm.

Toutes les 4 mn, à partir de l'introduction de la poudre choisie comme temps origine, des échantillons sont prélevés directement sur le malaxeur à partir d'un emporte-pièce de forme rectangulaire, puis refroidis entre des plaques d'aluminium non pressées. Une mesure du YI (Yellowness Index, fonction des composants élémentaires L, a, b) est effectuée à des temps particuliers représentatifs de la transformation du PVC à cette température, à partir d'un colorimètre HUNTERLAB modèle D 25 M PC 2 à orifice de visée de diamètre 1 inch.

Les valeurs exprimées en terme de YI sont notées ci-après:

4.-Tableau des résultats

| Sel de Ca | DHP | SBM | Hydrotalcite | Stabilité dynamique YI 12 | Stabilité dynamique YI 20 | Stabilité Presse à 185°C (temps de noircissement total - mn) |
|---|---|---|---|---|---|---|
| 0,42 | 0,05 | 0,19 | - | 54,6 | 105,4 | 80 |
| 0,42 | - | 0,24 | - | 51,5 | 100,2 | 80 |
| 0,42 | - | 0,24 | 0,5 | 37,2 | 90,8 | 110 |
| 0,42 | 0,05 | 0,19 | 0,5 | 34,1 | 86,7 | 115 |
| 0,42 | 0,08 | 0,16 | 0,5 | 32 | 82,5 | 115 |
| 0,42 | 0,24 | - | 0,5 | 36 | 89 | 110 |
| - | 0,05 | 0,19 | 0,5 | 44,1 | 71,6 | 60 |
| - | - | 0,24 | 0,5 | 49,5 | 80,6 | 60 |
| - | 0,24 | - | 0,5 | 47 | 83 | 60 |
| 0,42 | - | - | - | 110,7 | 137,2 | 80 |
| 0,42 | - | - | 0,5 | 110,2 | 132,6 | 80 |
| - | - | - | 0,5 | 70,4 | 87,9 | 80 |

Remarques

Les meilleurs résultats (coloration/temps de noircissement) sont obtenus avec la composition à base du mélange sel de Ca/DHP/SBM/hydrotalcite.

A noter que les mélanges à base de DHP utilisée seule et à dose importante (> 0,1 pcr) conduisent à une fluorescence importance.

## Revendications

**1.** Compositions stabilisantes pour polymères halogénés, comprenant au moins un stabilisant constitué par un sel métallique d'acide carboxylique, caractérisées en ce qu'elles comprennent :

a) au moins une béta-dicétone

b) au moins une hydrotalcite comprenant au moins un cation métallique divalent choisi dans le groupe constitué par Mg, Ca, Sr et Ba, au moins un cation métallique choisi dans le groupe constitué par Zn, Cd, Pb et Sn et au moins un cation métallique trivalent

c) au moins une dihydropyridine

**2.** Compositions selon la revendication 1, caractérisées en ce que les sels métalliques sont choisis parmi les acétates, acétoacétates, stéarates, oléates, laurates, palmitates, benzoates, hydroxystéarates, éthyl-2 hexanoates de calcium, baryum, zinc et cadmium éventuellement sous forme de couples tels que Ca/Zn, Ba/Ca, Ca/Cd ou Ba/Zn.

**3.** Compositions selon l'une quelconque des revendications 1 ou 2, caractérisées en ce que la béta-dicétone est choisie dans le groupe constitué par le stéaroylbenzoylméthane, la benzoylacétone et la stéroylacétone.

**4.** Compositions selon l'une quelconque des revendications 1 à 3, caractérisées en ce que l'hydrotalcite répond à la formule :

$$\left[(Mg^{2+} \text{ ou } Mg^{2+} / Ca^{2+})_{y1} \ (Zn^{2+} \text{ et/ou } Cd^{2+})_{y2}\right]_{1-x}$$

$$Al^{3+}_{x} \ (OH)_2 \ CO^{2+}_{3\ x/2} \ \cdot \ w\ H_2O$$

dans laquelle :

$0 < x \leqq 0,5$
$0 < y_1$
$0 < y_2$
$0,5 \leqq y_1 + y_2 \leqq 1$
$0 < w < 2.$

**5.** Compositions selon l'une quelconque des revendications 1 à 4, caractérisées en ce que la dihydropyridine répond à la formule :

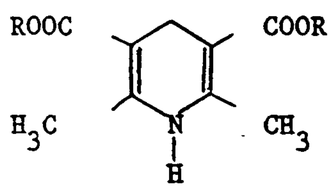

dans laquelle R représente un radical alkyle ayant de 1 à 12 atomes de carbone, un radical alcényle ayant jusqu'à 6 atomes de carbone, un radical cyclohexyle ou un radical phényle.

**6.** Compositions selon la revendication 5, caractérisées en ce que la dihydropyridine est choisie dans le groupe constitué par le diméthyl-2,6 dihydro-1,4 pyridine dicarboxylate-3,5 de diéthyle et le diméthyl-2,6 dihydro-1,4 pyridine dicarboxylate-3,5 de dilauryle.

**7.** Compositions selon l'une quelconque des revendications 1 à 6, caractérisées en ce qu'elle comprend (en poids) :

- 40 à 70 % du sel métallique d'acide carboxylique,
- 5 à 20 % de béta-dicétone
- 5 à 20 % d'hydrotalcite
- 5 à 20 % de dihydropyridine

**8.** Compositions de polymères halogénés stabilisées au moyen d'une composition selon l'une quelconque des revendications 1 à 7.

**9.** Compositions selon la revendication 8, caractérisées en ce que le polymère halogéné renferme des halogènes apportés par le système catalytique de polymérisation, par des traitements post-polymérisation ou par une partie au moins des monomères polymérisés.

**10.** Compositions selon l'une quelconque des revendications 8 ou 9, caractérisées en ce que le polymère halogéné est choisi parmi les homopolymères et les copolymères du chlorure de vinyle.

**11.** Compositions selon l'une quelconque des revendications 8 à 10, caractérisées en ce qu'elles comprennent, pour 100 parties de polymère halogéné :

- 0,01 à 5 parties de sel métallique d'acide carboxylique
- 0,005 à 2 parties de béta-dicétone
- 0,005 à 2 parties d'hydrotalcite
- 0,005 à 2 parties de dihydropyridine

**12.** Compositions selon l'une quelconque des revendications 8 à 11, caractérisées en ce qu'elles comprennent en outre l'un au moins des additifs constitués par les agents renforçateurs de chocs, les pigments, charges, plastifiants, antioxydants, stabilisants lumière ou ultraviolet.

**13.** Objets conformés issus en tout ou partie des compositions selon l'une quelconque des revendications 1 à 12.

## Claims

**1.** Stabilizing compositions for halogenated polymers, comprising at least one stabilizer consisting of a metal salt of a carboxylic acid, characterized in that they comprise:

a) at least one beta-diketone

b) at least one hydrotalcite comprising at least one divalent metal cation chosen from the group consisting of Mg, Ca, Sr and Ba, at least one metal cation chosen from the group consisting of Zn, Cd, Pb and Sn and at least one trivalent metal cation

c) at least one dihydropyridine.

**2.** Compositions according to Claim 1, characterized in that the metal salts are chosen from acetates, acetoacetates, stearates, oleates, laurates, palmitates, benzoates, hydroxystearates and 2-ethylhexanoates of calcium, barium, zinc and cadmium, optionally in the form of pairs such as Ca/Zn, Ba/Ca, Ca/Cd or Ba/Zn.

**3.** Compositions according to either of Claims 1 and 2, characterized in that the beta-diketone is chosen from the group consisting of stearoyl-benzoylmethane, benzoylacetone and stearoylacetone.

**4.** Compositions according to any one of Claims 1 to 3, characterized in that the hydrotalcite corresponds to the formula:

$$[(Mg^{2+} \text{ or } Mg^{2+}/Ca^{2+})_{y1} (Zn^{2+} \text{ and/or } Cd^{2+})_{y2}]_{1-x} Al_x^{3+} (OH)_2 CO_3^{2+}{}_{x/2} . w H_2O$$

in which:

$0 < x \leqq 0.5$
$0 < y_1$
$0 < y_2$
$0.5 \leqq y_1 + y_2 \leqq 1$
$0 < w < 2.$

**5.** Compositions according to any one of Claims 1 to 4, characterized in that the dihydropyridine corresponds to the formula:

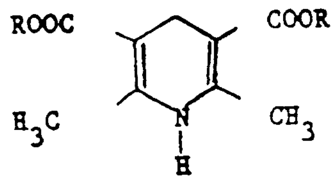

in which R denotes an alkyl radical containing from 1 to 12 carbon atoms, an alkenyl radical containing up to 6 carbon atoms, a cyclohexyl radical or a phenyl radical.

**6.** Compositions according to Claim 5, characterized in that the dihydropyridine is chosen from the group consisting of diethyl 2,6-dimethyl-1,4-dihydropyridine-3,5-dicarboxylate and dilauryl 2,6-dimethyl-1,4-dihydropyridine-3,5-dicarboxylate.

**7.** Compositions according to any one of Claims 1 to 6, characterized in that they comprise (by weight):
- 40 to 70 % of the metal salt of a carboxylic acid,
- 5 to 20 % of beta-diketone
- 5 to 20 % of hydrotalcite
- 5 to 20 % of dihydropyridine.

**8.** Halogenated polymer compositions stabilized by means of a composition according to any one of Claims 1 to 7.

**9.** Compositions according to Claim 8, characterized in that the halogenated polymer contains halogens contributed by the polymerization catalyst system, by postpolymerization treatments or by at least a part of the polymerized monomers.

**10.** Compositions according to either of Claims 8 and 9, characterized in that the halogenated polymer is chosen from vinyl chloride homopolymers and copolymers.

**11.** Compositions according to any one of Claims 8 to 10, characterized in that they comprise, per 100 parts of halogenated polymer:
- 0.01 to 5 parts of metal salt of a carboxylic acid
- 0.005 to 2 parts of beta-diketone
- 0.005 to 2 parts of hydrotalcite
- 0.005 to 2 parts of dihydropyridine.

**12.** Compositions according to any one of Claims 8 to 11, characterized in that they additionally contain at least one of the additives consisting of impact improvers, pigments, fillers, plasticizers, antioxidants and light- or ultraviolet stabilizers.

**13.** Shaped articles originating wholly or partially from the compositions according to any one of Claims 1 to 12.

## Patentansprüche

**1.** Stabilisierende Zusammensetzungen für halogenierte Polymere, bestehend aus mindestens einem Stabilisator, der aus einem Carbonsäuremetallsalz gebildet ist, dadurch gekennzeichnet, daß sie

a) mindestens ein beta-Diketon,

b) mindestens ein Hydrotalcit, das mindestens ein zweiwertiges Metallkation, das aus der mit Mg, Ca, Sr und Ba gebildeten Gruppe ausgewählt wird, mindestens ein Metallkation, das aus der mit Zn, Cd, Pb und Sn gebildeten Gruppe ausgewählt wird, und mindestens ein dreiwertiges Metallkation enthält,

c) mindestens ein Dihydropyridin,

enthalten.

**2.** Zusammensetzungen nach Anspruch 1, dadurch gekennzeichnet, daß die Metallsalze unter den Acetaten, Acetylacetonaten, Stearaten, Oleaten, Lauraten, Palmitaten, Benzoaten, Hydroxystearaten, Calcium-, Barium-, Zink- und Cadmium-2-Ethylhexanoaten, gegebenenfalls in Form von Zweierkombinationen wie Ca/Zn, Ba/Ca, Ca/Cd oder Ba/Zn ausgewählt werden.

**3.** Zusammensetzungen nach einem der Ansprüche 1 oder 2, dadurch gekennzeichnet, daß das beta-Diketon aus der mit Stearoylbenzoylmethan, Benzoylacetonat und Steroylacetonat gebildeten Gruppe ausgewählt wird.

**4.** Zusammensetzungen nach einem der Ansprüche 1 bis 3, dadurch gekennzeichnet, daß das Hydrotalcit der Formel

$$[(Mg^{2+} \text{ oder } Mg^{2+}/Ca^{2+})_{yl} (Zn^{2+} \text{ und/oder } Cd^{2+})_{y}2]_{1-x} Al_x^{3+} (OH)_2 CO_3^{2+}{}_{x/2} \; . \; w \; H_2O$$

entspricht,
mit:
$0 < x \leqq 0{,}5$
$0 < y_1$
$0 < y_2$
$0{,}5 \leqq y_1 + y_2 \leqq 1$
$0 < w < 2$.

**5.** Zusammensetzungen nach einem der Ansprüche 1 bis 4, dadurch gekennzeichnet, daß das Dihydropyridin der Formel

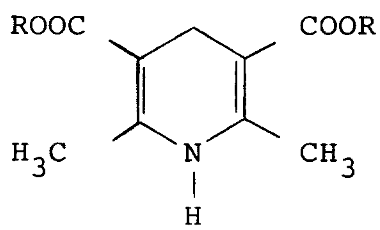

entspricht,
in der R für eine Alkylgruppe mit 1 bis 12 Kohlenstoffatomen, einen Alkenylsubstituenten mit bis zu 6 Kohlenstoffatomen, einen Cyclohexylrest oder einen Phenylsubstituenten steht.

**6.** Zusammensetzungen nach Anspruch 5, dadurch gekennzeichnet, daß das Dihydropyridin aus der mit 2,6-Dimethyl-1,4-dihydro-pyridin-3,5-bis(carbonsäureethylester) und 2,6-Dimethyl-1,4-dihydro-pyridin-3,5-bis(carbonsäurelaurylester) gebildeten Gruppe ausgewählt wird.

**7.** Zusammensetzungen nach einem der Ansprüche 1 bis 6, dadurch gekennzeichnet, daß sie (in Gewichtsanteilen)

- 40 bis 70 % des Carbonsäuremetallsalzes
- 5 bis 20 % des beta-Diketons,
- 5 bis 20 % des Hydrotalcits,
- 5 bis 20 % des Dihydropyridins

enthalten.

**8.** Zusammensetzungen von halogenierten Polymeren, die mit einer Zusammensetzung nach einem der Ansprüche 1 bis 7 stabilisiert wird.

**9.** Zusammensetzungen nach Anspruch 8, dadurch gekennzeichnet, daß das halogenierte Polymer Halogene beinhaltet, die über das katalytische Polymerisationssystem, durch die Behandlung nach der Polymerisation oder durch mindestens einen Teil der polymerisierten Monomeren eingetragen werden.

**10.** Zusammensetzungen nach einem der Ansprüche 8 oder 9, dadurch gekennzeichnet, daß das halogenierte Polymer unter den Homopolymeren und den Copolymeren des Vinylchlorids ausgewählt wird.

**11.** Zusammensetzungen nach einem der Ansprüche 8 bis 10, dadurch gekennzeichnet, daß sie auf 100 Teile halogenierter Polymere
- 0,01 bis 5 Teile des Carbonsäuremetallsalzes,
- 0,005 bis 2 Teile des beta-Diketons,
- 0,005 bis 2 Teile von Hydrotalcit,
- 0,005 bis 2 Teile des Dihydropyridins,

enthalten.

**12.** Zusammensetzungen nach einem der Ansprüche 8 bis 11, dadurch gekennzeichnet, daß sie außerdem mindestens eines der Additive enthalten, die aus Verstärkungsmitteln zur Schlagfestigkeit, Pigmenten, Füllstoffen, Weichmachern, Antioxydantien, Licht- oder Ultraviolettstabilisatoren gebildet werden.

**13.** Hergestellte Gegenstände, die ganz oder teilweise aus den Zusammensetzungen nach einem der Ansprüche 1 bis 12 entstehen.